# NEW EUROPEAN PATENT SPECIFICATION

(11) **EP 0 168 898 B2**
(45) Date of publication and mention of the opposition decision: **02.02.1994**
(45) Mention of the grant of the patent: 13.09.1989
(21) Application number: 85201186.5
(22) Date of filing: 12.07.1985
(51) Int. Cl.: A01B 29/04

(54) **Soil cultivating implements**
Bodenbearbeitungsgeräte
Machines pour le travail du sol

(30) Priority: 16.07.1984 NL 8402242
(43) Date of publication of application: 22.01.1986
(73) Proprietor: C. van der Lely N.V., NL-3155 PD Maasland (NL)
(72) Inventor: Van der Lely, Cornelis, CH-Zug (CH)
(74) Representative: Mulder, Herman

(56) References cited:
- DE-A- 3 402 064
- DE-U- 8 026 581
- FR-A- 2 221 062
- NL-A- 7 708 955
- NL-A- 8 203 047
- US-A- 1 698 451
- US-A- 1 931 960

## Description

The invention relates to a soil cultivating implement comprising a ground roller consisting of a cylindrical carrier around the periphery of which a plurality of profiled plate members are arranged to form rings exhibiting a plurality of substantially planar projections that repeatedly penetrate into the soil when the roller revolves during use of the implement, and said projections being defined by said profiled plate members having opposite corrugated inner and outer peripheries with respect to the intended axis of rotation of the roller.

Such an implement is known from DE-GM-8026581. In this document the profiled plate members are formed by waved ringlike bands, the radially inwardly curved parts of which are welded against the surface of the cylindrical carrier, while the radially outwardly curved parts of these bands form the projections which repeatedly penetrate into the soil when the roller revolves during use of the implement. The problem with these waved ringlike bands is their manufacturing as there are considerable losses of material when the plate members are punched out of plate material.

In order to minimise losses of material the implement as described above is, according to the invention, characterized in that the shape and dimensions of the inner periphery of a profiled plate member are equal to the shape and dimensions of the outer periphery of another profiled plate member throughout at least the greatest part of their lengths. This constructional arrangement enables the plate members to be produced by punching operations in a simple and relatively inexpensive manner that is exceptionally economic as regards a low waste of the material from which the plate members are made.

The NL-A-8203047 discloses a soil cultivating implement comprising a ground roller consisting of a cylindrical carrier around the periphery of which a plurality of profiled plate members are arranged to form rings exhibity a plurality of substantially planar projections that repeatedly penetrate into the soil when the roller revolves during use of the implement. Although each ring is formed by a number of profiled plate members, the shape and the dimensions of the plate members are such that they cannot be produced by punching without considerable losses of material too.

Other aspects of the invention will become apparent from the following detailed description and from the claims which are appended to that description.

For a better understanding of the invention, and to show how the same may be carried into effect, reference will now be made, by way of example, to the accompanying drawings, in which:-
Figure 1 is a plan view of a soil cultivating implement constructed in accordance with the invention shown connected to the rear of an agricultural tractor,
Figure 2 is a side view, to an enlarged scale, as seen in the direction indicated by an arrow II in Figure 1,
Figure 3 is a section, to a further enlarged scale, taken on the line III-III in Figure 1,
Figure 4 is a rear view of one end of a ground roller of the implement as seen in the direction indicated by an arrow IV in Figure 3, and
Figure 5 illustrates the way in which a number of members destined to form parts of the ground roller of the implement can be formed by punching operations from a single metallic strip or plate.

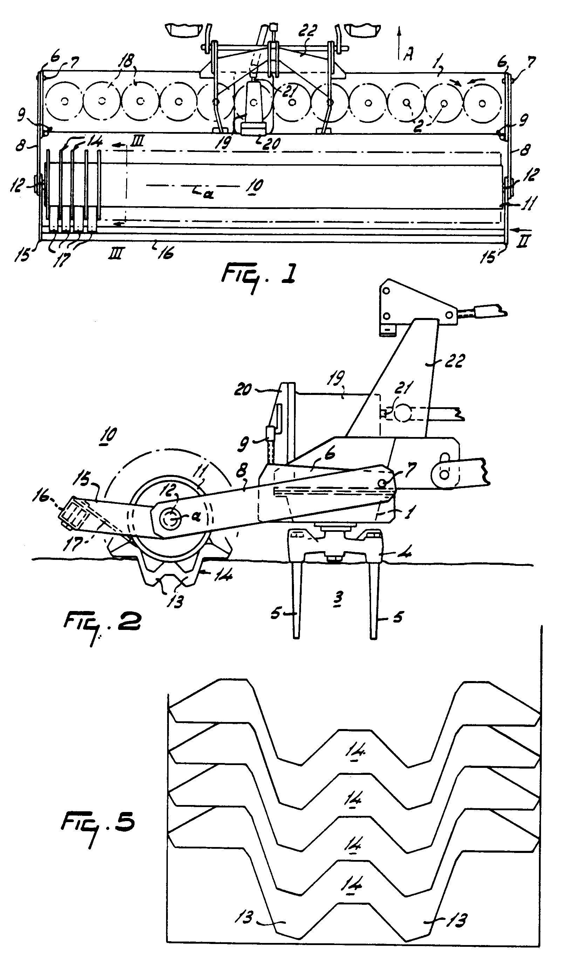

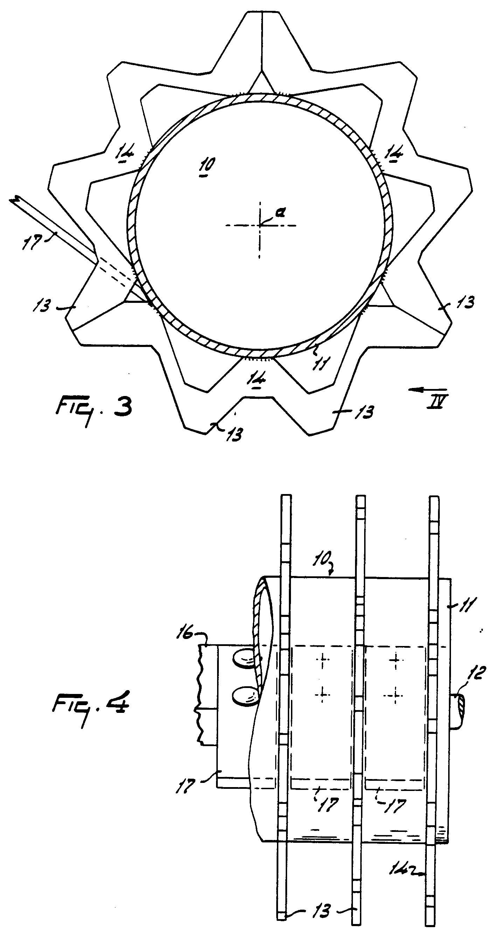

Referring to the accompanying drawings, the soil cultivating implement that is illustrated therein is in the form of a rotary harrow that is intended primarily, but not exclusively, for producing seed beds in previously worked agricultural soil. The implement has an elongate, hollow, box-section frame portion 1 that extends substantially horizontally transverse and usually, as illustrated, substantially horizontally perpendicular, to the intended direction of operative travel of the implement that is indicated by an arrow A in Figure 1 of the drawings. A plurality, of which there are twelve in the example that is being described, of upwardly extending and usually vertical or substantially vertical shafts 2 are rotatably mounted in the hollow frame portion 1, with the aid of upper and lower bearings, to lie in a single row that is parallel to the transverse length of the frame portion 1, each shaft 2 being parallel to all of the others and the longitudinal axes of the shafts 2 being regularly spaced apart from one another in the row by distances which very advantageously, but not essentially, have magnitudes of substantially 25 centimetres.

Each shaft 2 has a splined or otherwise keyed portion which projects downwardly from beneath the bottom of the hollow frame portion 1 and upon which shaft portion the central hub of a corresponding soil working member 3 is firmly but releaseably secured with the aid of a short screwthread, a co-operating nut and a split pin or other known means designed to prevent the nut from working loose. The hub is located centrally of a rigid carrier 4 of each soil working member 3, said carrier 4 comprising arms which radiate in opposite substantially horizontal directions from said central hub and which include sleeve-like holders at substantially their outer ends. Each sleeve-like holder firmly but releaseably receives an upper fastening portion of a corresponding soil working tool in the form of a rigid metallic tine 5 that also includes a downwardly tapering soil working portion which preferably trails rearwardly by a few degrees from top to bottom with respect to the intended direction of operative rotation of the soil working member 3 of which it forms a part.

The opposite ends of the hollow frame portion 1 are closed by corresponding side plates 6 that extend substantially vertically parallel to one another and to the direction A, each side plate 6 being larger in area than is the end of the frame portion 1 which it closes and being provided at substantially its upper leading corner, with respect to the direction A, with a corresponding strong horizontal pivot 7 which defines an axis that is parallel to the length of the hollow frame portion 1 and to the row of soil working members 3, the two strong horizontal pivots 7 being in alignment with one another. An arm 8 has its leading end, with respect to the direction A, turnably connected to the neighbouring frame portion side plate 6 by the respective strong pivot 7 and said arm 8 extends generally rearwardly, with respect to the direction A, from the strong pivot 7 alongside the outer surface of the immediately neighbouring plate 6 to a location spaced well rearwardly behind the rearmost edge of that plate 6.

Each arm 8 is turnable upwardly and downwardly about the substantially horizontal axis defined by the aligned strong pivot pins 7 by means of an adjusting mechanism comprising a screw-threaded spindle 9 having a manually operable crank handle at its uppermost end. The adjusting mechanism which comprises the spindles 9 is not shown in detail in the drawings since it may be of a construction that is well known per se and does not form the subject of the present invention.

A ground roller that is generally indicated by the reference 10, and that is in the form of a so-called "packer" roller, is rotatably mounted between the ends of the two arms 8 that are remote from the strong pivots 7, the bodily level of the ground roller 10 relative to that of the frame portion 1 and soil working members 3 being dictated principally by the angular positions of the arms 8 about the pivots 7 which are set by appropriate adjustments of the spindles 9 of the adjusting mechanism. As previously mentioned, the ground roller 10 is in the form of a so-called "packer" roller, such a roller being particularly suitable for use in the preparation of seed beds. The ground roller 10 comprises a hollow cylindrical carrier 11 of circular cross-section whose longitudinal axis/axis of rotation a extends substantially horizontally parallel to the hollow frame portion 1 and to the row of soil working members 3 and thus usually substantially horizontally perpendicular to the direction A.

Aligned stub-shafts 12 are mounted at the opposite axial ends of the cylindrical carrier 11 to coincide with the axis a and are received in substantially horizontally aligned rotary bearings carried by the arms 8 adjacent the rearmost ends of the latter with respect to the direction A.

The cylindrical carrier 11 of the roller 10 is provided at regular intervals along its axial length with tooth-like projections 13 of plate formation, the projections 13 being arranged in rings around the outer curved surface of the carrier 11 with the regular spacing between the successive "rings" advantageously but not essentially having a magnitude of substantially 8 centimetres. Each ring of tooth-like projections 13 comprises three identical or substantially identical profiled plate members 14 that are successively arranged at 120° intervals around the outer surface of the cylindrical carrier 11 and thus also around the axis a. However, although each ring of three plate members 14 is identical or substantially identical to all of the other rings, each ring is so positioned on the cylindrical carrier 11 as to be turned angularly by a few degrees about the axis a with respect to the or each of its immediate neighbours, this angular off-set being of uniform magnitude along the length of the roller 10 so that the outer ends of the tooth-like projections 13 extend in helical rows around the longitudinal axis a of the roller 10.

As can be seen best in Figures 2 and 3 of the drawings, each plate member 14 is of approximately winged W-shape and defines two projections 13 flanked by two "half" projections. The plate members 14 are prefabricated, by punching operations, from a preferably elongate metal strip or plate as shown in Figure 5, that strip or plate having a width of substantially 40 centimetres and a thickness of substantially 10 millimetres, the external diameter of the cylindrical carrier 11 of the roller 10 having a magnitude of substantially 30 centimetres. It will be seen from Figures 3 and 5 of the drawings that the shape and dimensions of the inner periphery of a profiled plate member 14 (the upper edge thereof in Figure 5) are equal to the shape and dimensions of the outer periphery of another profiled plate member 14 (the lower edge thereof in Figure 5) throughout at least the greatest part of their length, a departure from the matching edge configuration being found only in outer portions of the "wings" of the approximate W-shapes. Since the width of the strip or plate shown in Figure 5 substantially exactly matches the width of each plate member 14, it will be apparent that a large number of the profiled plate members 14 can be punched from a single elongate strip or plate with wastage of the material of that strip or plate reduced to a very low proportion thereof.

It is immediately apparent in Figure 3 of the drawings that, at the opposite ends of each plate member 14, those ends define the aforementioned projection "halves" and, when three plate members 14 are assembled around the cylindrical carrier 11 to form a ring of projections 13, three pairs of projection "halves" adjoin one another to produce three complete projections 13 that are substantially exactly equivalent to the two complete projections 13 which are wholly defined by each single plate member 14. By virtue of the described way of forming the plate members 14, the outer ends of the projections 13 are arcuately and convexly curved in such a way that, when the roller 10 is assembled, their centres of curvature substantially coincide with the axis a. Similarly and consequentially, the inner periphery of each plate member 14 defines gaps and the inward projections between these gaps have inner ends that are arcuately and concavely curved to have their centres of curvature substantially coincident with the axis a when the roller is assembled. The gap defined inwardly of each co-operating pair of "half" projections is smaller in size than is each gap corresponding to a complete projection 13.

The arcuately curved inner ends of the inwardly directed projections of each plate member 14 are rigidly and permanently secured, preferably by welding lines or seams, to the matchingly curved outer surface of the roller carrier 11. These relatively short and relatively spaced local welding lines or seams can quickly and easily be produced by appropriately assembled and controlled automatic or semi-automatic welding equipment and it has been found that it is not always necessary to extend the welding lines or seams throughout the whole of the length of contact between the inner end of each inward projection of one of the plate members 14 and the matchingly curved outer surface of the carrier 11. Each tooth-like projection 13 is of truncated triangular configuration and, in the example that is being described, each ring of projections 13 comprises nine of those projections.

Elongate lugs 15 project more or less horizontally rearwards from substantially the rear ends of the arms 8 and the rear ends of said lugs 15 themselves are perpendicularly interconnected by a support 16 of substantially square cross-section which support 16 extends substantially horizontally parallel to the longitudinal axis/axis of rotation a of the roller 10. A row of blade-shaped scrapers 17 is adjustably secured by bolts to the support 16, each scraper 17 extending downwardly and forwardly, with respect to the direction A, from an inclined upper surface of the support 16 to lie between two immediately neighbouring rings of projections 13 with its foremost edge located very close to, or in light contact with, the outer surface of the cylindrical carrier 11 between that pair of projection rings.

The scrapers 17 are effective in dislodging significant accumulations of mud, clods of earth, jammed stones and the like from between the rings of projections 13 and thus prevent the action of the roller 10 from being interfered with by such adhering materials.

Each shaft 2 is provided, inside the hollow frame portion 1, with a corresponding straight- or spur-toothed pinion 18, the sizes of the pinions 18 being such that the teeth of each of them are in mesh with those of the or each immediately neighbouring pinion 18 in the single row of twelve, in this embodiment, such pinions 18. Due to this inter-meshing relationship of the pinions 18, each shaft 2, soil working member 3 and pinion 18 will revolve in the opposite direction to the or each immediately neighbouring similar assembly when the implement is in use as indicated by small arrows at the top and right of Figure 1 of the drawings. One of the centre pair of shafts 2 in the single row thereof has an upward extension through the flat top of the hollow frame portion 1 into a gear box 19 that is firmly but releaseably bolted in position, or otherwise mounted, on that flat top. The gear box 19 includes a rotary input shaft 21 whose splined or otherwise keyed leading end projects substantially horizontally forwards from the front of that gear box in substantially the direction A where it can be placed in driven connection with the rear power take-off shaft of an agricultural tractor or other operating vehicle by way of an intermediate telescopic transmission shaft of which part can be seen in Figures 1 and 2 of the drawings, said transmission shaft being of a construction that is known per se, having universal joints at its opposite ends.

Shafts and bevel pinions within the gear box 19 place the rotary input shaft 21 in driving connection with the upward extension of said one of the shafts 2 that has been mentioned above and the back of the gear box 19, with respect to the direction A, is provided with a change-speed gear 20 whose construction is not the subject of the present invention. It suffices to say that the change-speed gear 20 has a readily removable cover beneath which the splined or otherwise keyed ends of two shafts are accessible to cooperate with the matchingly internally splined or otherwise keyed hubs of two straight- or spur-toothed pinions whose sizes are such that their teeth will mesh with one another and dictate a corresponding transmission ratio between the two shafts concerned. The two pinions can be interchanged on the shaft ends or can be exchanged for at least one other pair of cooperating pinions of different relative sizes so that any chosen one of a number of different transmission ratios is available enabling the soil working members 3 to be rotated at faster or slower rates without having to alter the driving speed of rotation which is applied to the leading end of the rotary input shaft 21.

The top and front of the hollow frame portion 1, with respect to the direction A, is provided with a coupling member or trestle 22 which is constructed and arranged for co-operation with the three-point lifting device or hitch at the rear of an agricultural tractor or other operating vehicle to enable that tractor or other vehicle to move the implement over the ground and, when required, to lift it free of contact with the ground. The coupling member or trestle 22 is not the subject of the present invention and will accordingly not be described in detail.

In the use of the soil cultivating implement that has been described, its coupling member or trestle 22 is employed to connect it to the three-point lifting device or hitch at the rear of the agricultural tractor or other vehicle which is both to move and operate the implement and the aforementioned telescopic transmission shaft having universal joints at its opposite ends is arranged to transmit drive from the rear power take-off shaft of the same tractor or other vehicle to the rotary input shaft 21 of the gear box 19. Adjustments which may, it required, be made before work commences include employing the adjusting mechanism that comprises the screw-threaded spindles 9 to raise or lower the bodily level of the ground roller 10 relative to that of the frame portion 1 and soil working members 3 thus changing the maximum depth of penetration of the tines 5 into the soil which is possible. A transmission ratio appropriate to the required speed of rotation of the soil working members 3 may be established by an adjustment of the change-speed gear 20 and, occasionally, at least some of the scrapers 17 may require to be adjusted in position relative to the cylindrical carrier 11 of the ground roller 10. As the implement moves operatively in the direction A, each soil working member 3 will cultivate an individual strip of ground that extends in the direction A but, since the effective distance between the two tines 5 of each member 3 is the same as, or a little greater than, the distance between the axes of rotation of immediately neighbouring shafts 2, the twelve individual strips of worked soil will overlap, or at least adjoin, one another to produce a single broad strip of worked soil that extends in the direction A, and that, in the case of the example which is being described, will have a width of substantially, but not necessarily exactly, three metres. Larger or smaller working widths can be established by increasing or decreasing the number of rotary soil working members 3 in the single row thereof. The packer ground roller 10 engages the soil displaced and crumbled by the members 3 immediately behind those members and will further crumble, distribute and subsequently gently consolidate that soil, the continuously curved surface of the cylindrical carrier 11 which extends between the relatively spaced rings of projections 13 principally being effective in performing the consolidation. The repeated penetration of the tooth-like projections 13 into the ground ensures that the roller 10 will revolve continuously about its axis a at a speed which is directly related to the speed of travel in the direction A.

The scrapers 17 prevent any material which would interfere with the effective action of the roller 10 from adhering to that roller, and particularly from remaining jammed between the rings of projections 13, for more than a very brief instant of time.

The shape of the prefabricated plate members 14 and the described and illustrated way in which they are manufactured ensures that only a very small proportion of the material from which they are formed is wasted and has to be re-cycled. The inner ends of the inwardly directed projections of each plate member 14 are shaped to match the curvature of the surface of the roller carrier 11 and also match the shape of portions of the outer periphery of the same member 14 thus making possible the manufacturing arrangement which has been described with reference to Figure 5 of the drawings and which arrangement results in the very low proportion of material which is wasted. This very low wastage of material secondarily results from the fact that the "wings" at the opposite ends of each plate member 14 define two "half" projections which, when the plate members 14 are assembled into rings as shown in Figure 3 of the drawings, co-operate with symmetrically identical neighbouring "half" projections effectively to form complete projections 13 that are similar to those wholly defined by each plate member 14.

The fact that each projection 13 is effectively formed, internally thereof and alongside the curved surface of the carrier 11, with a gap of approximately triangular configuration (see Figure 3) reduces the overall surface area of each projection 13 with a consequent reduction in the likelihood of mud and clods of soil adhering to the projections. Any significant adhering mud or clods of soil that resist the action of the scrapers 17 can usually be quite easily removed by, for example, passing a dislodging tool through at least one appropriate gap. The many angularly staggered and uniformly spaced apart rings of projections 13 ensure that the roller 10 will be continuously rotated, without slippage, even when cultivating soil under somewhat adverse working conditions.

The described method of forming the packer ground roller 10 enables that roller to be made relatively quickly, easily and inexpensively with only a very small proportion of the material required for the plate members 14 being wasted. The packer ground roller 10 is significantly lighter in weight than is a conventionally produced packer ground roller of substantially the same size and this is very important when the implement is employed in combination with an immediately following seed drill or planting machine since the raising of such a combination clear of the ground by the three-point lifting device or hitch of a tractor or other vehicle very heavily loads that lifting device or hitch and any significant reduction in the weight of the cultivating implement will produce a corresponding reduction in that heavy loading.

It is noted that, although the described and illustrated packer ground roller 10 will usually form part of a soil cultivating implement such as the one that has also been described and illustrated, said roller 10 alone will perform a soil cultivating operation and can therefore be employed as a soil cultivating implement in accordance with the invention in the absence of the parts which are shown in advance of it, with respect to the direction A, in Figures 1 and 2 of the drawings, those parts merely being replaced by simple parts constructed and arranged for connection to a towing tractor or other vehicle.

## Claims

1. A soil cultivating implement comprising a ground roller (10) consisting of a cylindrical carrier (11) around the periphery of which a plurality of profiled plate members (14) are arranged to form rings exhibiting a plurality of substantially planar projections (13) that repeatedly penetrate into the soil when the roller (10) revolves during use of the implement, and said projections (13) being defined by said profiled plate members (14) having opposite corrugated inner and outer peripheries with respect to the intended axis of rotation (a) of the roller (10), characterized in that the shape and dimensions of the inner periphery of a profiled plate member (14) are equal to the shape and dimensions of the outer periphery of another profiled plate member (14) throughout at least the greatest part of their lengths.

2. An implement according to claim 1, characterized in that the substantially planar projections (13) form parts of pre-fabricated plate members (14) each of which members (14) is approximately of winged W-shape (Figures 3 and 5).

3. An implement according to any preceding claim, characterized in that the substantially planar projections (13) are defined by plate members (14), and in that the radially inner periphery, with respect to the intended axis of rotation (a) of the roller (10), of each member (14) is secured to the external surface of a cylindrical carrier (11) of the roller (10) only at a plurality of relatively spaced apart locations.

4. An implement according to any preceding claim, characterized in that each plate member (14) defines at least two of said substantially planar projections (13).

5. An implement according to any preceding claim, characterized in that, in each ring, the adjoining ends of separate plate members (14) co-operate to define further projections (13).

6. An implement according to any preceding claim, when read as directly or indirectly appendant to claim 2, characterized in that each ring comprises three of said approximately winged W-shaped plate members (14).

7. An implement according to any preceding claim, characterized in that the general plane of each ring and of each plate member (14) affording that ring is perpendicular or substantially perpendicular to the longitudinal axis (a) of the cylindrical carrier (11) of the roller (10) (Figure 4).

8. An implement according to any preceding claim, when read as appendant to claim 3, characterized in that the radially inner periphery of each plate member (14) is shaped to correspond with the external shape of the cylindrical carrier (11) only at a plurality of relatively spaced apart locations.

9. An implement according to any preceding claim, characterized in that the inner periphery, with respect to the intended axis of rotation (a) of the roller (10), of each of a plurality of plate members (14) that define said substantially planar projections (13) is comprised wholly or principally by the inner ends of a plurality of inwardly tapering projections of each plate member (14).

10. An implement according to claim 9, characterized in that the inner ends of the inwardly tapering projections of each plate member (14) are of arcuately curved concave configuration, the centre of curvature substantially coinciding with the intended axis of rotation (a) of the roller (10).

11. An implement according to claim 5, characterized in that a substantially planar projection (13) which is defined by the neighbouring ends of two plate members (14) in one of said rings includes a gap which is of smaller size than is a gap corresponding to one of the projections (13) that is defined wholly by the respective plate member (14).

12. An implement as claimed in any preceding claim, characterized in that a plurality of the plate members (14) which define the substantially planar projections (13) are formed in approximately winged W-shape from a single strip of plate material (Figure 5).

13. An implement according to any preceding claim, characterized in that the implement also comprises a plurality of soil working members (3) arranged in a row that extends substantially horizontally perpendicular, or at least transverse, to the intended direction of operative travel (A) of the implement with each member (3) being arranged to be power-rotatable about a corresponding substantially vertical, or at least upwardly extending, axis (2) and being arranged to co-operate with the or each immediately neighbouring member (3) in said row in working the soil, and in that said roller (10) is located to the rear of said members (3), with respect to the intended direction of operative travel (A), so as to be upwardly and downwardly adjustable (9) in bodily level relative to that of the members (3).

## Patentansprüche

1. Bodenbearbeitungsgerät mit einer Bodenwalze (10), die aus einem zylindrischen Träger (11) besteht, an dessen Außenfläche mehrere profilierte Plattenteile (14) zur Bildung von Ringen angeordnet sind, die eine Vielzahl im wesentlichen ebener Ansätze (13) aufweisen, die bei Drehung der Walze (10) während des Einsatzes des Gerätes wiederholt in den Boden eindringen und durch die profilierten Plattenteile (14) gebildet sind, die in bezug auf die Drehachse (a) der Walze (10) gegensinnige wellenförmige innere und äußere Peripherien aufweisen,
dadurch gekennzeichnet, daß zumindest über den größten Teil der Länge der Peripherien die Form und die Abmessungen der inneren Peripherie eines profilierten Plattenteiles (14) gleich der Form und den Abmessungen der äußeren Peripherie eines weiteren profilierten Plattenteiles (14) sind.

2. Gerät nach Anspruch 1,
dadurch gekennzeichnet, daß die im wesentlichen ebenen Ansätze (13) Bestandteile vorgefertigter Plattenteile (14) sind, wobei jedes Plattenteil (14) etwa flügelartig W-förmig gestaltet ist (Fig. 3 und 5).

3. Gerät nach einem der vorhergehenden Ansprüche,
dadurch gekennzeichnet, daß die im wesentlichen ebenen Ansätze (13) durch Plattenteile (14) gebildet sind, und daß die in bezug auf die Drehachse (a) der Walze (10) radial innere Peripherie jedes Teiles (14) an der Außenfläche eines zylindrischen Trägers (11) der Walze (10) nur an mehreren mit Abstand voneinander liegenden Stellen befestigt ist.

4. Gerät nach einem der vorhergehenden Ansprüche,
dadurch gekennzeichnet, daß jedes Plattenteil (14) wenigstens zwei der im wesentlichen ebenen Ansätze (13) bildet.

5. Gerät nach einem der vorhergehenden Ansprüche,
dadurch gekennzeichnet, daß bei jedem Ring die aneinandergrenzenden Enden separater Plattenteile (14) gemeinsam weitere Ansätze (13) bilden.

6. Gerät nach einem der vorhergehenden Ansprüche, sofern direkt oder indirekt von Anspruch 2 abhängig,
dadurch gekennzeichnet, daß jeder Ring drei der etwa flügelartig W-förmigen Plattenteile (14) aufweist.

7. Gerät nach einem der vorhergehenden Ansprüche,
dadurch gekennzeichnet, daß die allgemeine Ebene jedes Ringes und jedes diesen Ring bildenden Plattenteiles (14) senkrecht oder im wesentlichen senkrecht zu der Längsachse (a) des zylindrischen Trägers (11) der Walze (10) liegt (Fig. 4).

8. Gerät nach einem der vorhergehenden Ansprüche, sofern von Anspruch 3 abhängig,
dadurch gekennzeichnet, daß die radial innere Peripherie jedes Plattenteiles (14) einen derartigen Verlauf hat, daß sie der Außenform des zylindrischen Trägers (11) nur an mehreren mit Abstand voneinander liegenden Stellen entspricht.

9. Gerät nach einem der vorhergehenden Ansprüche,
dadurch gekennzeichnet, daß die in bezug auf die Drehachse (a) der Walze (10) innere Peripherie jedes Teiles einer Vielzahl von Plattenteilen (14), welche die im wesentlichen ebenen Ansätze (13) bilden, vollständig oder zum größten Teil durch die inneren Enden mehrerer nach innen verjüngter Vorsprünge jedes Plattenteiles (14) gebildet ist.

10. Gerät nach Anspruch 9,
dadurch gekennzeichnet, daß die inneren Enden der nach innen verjüngten Vorsprünge jedes Plattenteiles (14) eine bogenförmig gekrümmte, konkave Konfiguration aufweisen, wobei der Krümmungsmittelpunkt im wesentlichen auf der Drehachse (a) der Walze (10) liegt.

11. Gerät nach Anspruch 5,
dadurch gekennzeichnet, daß ein im wesentlichen ebener Ansatz (13), der durch die nebeneinanderliegenden Enden zweier Plattenteile (14) in einem der Ringe gebildet ist, eine Öffnung enthält, die kleiner ist als die in einem der vollständig von dem jeweiligen Plattenteil (14) gebildeten Ansätze (13) enthaltene Öffnung.

12. Gerät nach einem der vorhergehenden Ansprüche,
dadurch gekennzeichnet, daß mehrere Plattenteile (14), die die im wesentlichen ebenen Ansätze (13) bilden, jeweils aus einem etwa flügelartig W-förmigen Streifen Plattenmaterials gebildet sind (Fig. 5).

13. Gerät nach einem der vorhergehenden Ansprüche,
dadurch gekennzeichnet, daß das Gerät außerdem mehrere Bodenbearbeitungswerkzeuge (3) aufweist, die in einer Reihe angeordnet sind, die sich im wesentlichen horizontal im rechten Winkel oder wenigstens quer zur Arbeitsrichtung (A) des Gerätes erstreckt, wobei jedes Werkzeug (3) derart angeordnet ist, daß es um eine entsprechende, im wesentlichen vertikale oder sich wenigstens nach oben erstreckende Achse (2) antreibbar ist und bei der Bearbeitung des Bodens mit dem oder jedem unmittelbar benachbarten Werkzeug (3) in einer Reihe zusammenarbeitet, und daß die Walze (10) in bezug auf die Arbeitsrichtung (A) hinter den Werkzeugen (3) derart angeordnet ist, daß sie in bezug auf die Werkzeuge (3) in Höhenrichtung verstellbar (9) ist.

## Revendications

1. Machine pour cultiver le sol comprenant un rouleau de sol (10) consistant en un élément porteur (11) sur la périphérie duquel une pluralité d'organes profilés en plaques (14) sont disposés pour former des couronnes présentant une pluralité de saillants (13) pratiquement plans qui pénêtrent de manière répétitive dans le sol quand le rouleau (10) tourne pendant l'utilisation de la machine, et lesdits saillants (13) étant définis par lesdits organes profilés en plaques (14) ayant des périphéries opposées ondulées intérieures et extérieures par rapport à l'axe de rotation (a) prévu pour le rouleau (10),
**caractérisée** en ce que la forme et les dimensions de la périphérie intérieure d'un organe profilé en plaque (14) sont égales à la forme et aux dimensions de la périphérie extérieure d'un autre organe profilé en plaque (14) sur au moins la plus grande partie de leurs longueurs.

2. Machine selon la revendication 1, caractérisée en ce que les saillants (13) pratiquement plans font partie d'organes en plaques (14) préfabriqués, chacun de ces organes (14) ayant approximativement la forme d'un W avec des ailes (Figures 3 et 5).

3. Machine selon l'une ou l'autre des revendications précédentes, caractérisée en ce que les saillants (13) pratiquement plans sont définis par les organes en plaques (14), et en ce que la périphérie radialement intérieure, par rapport à l'axe de rotation (a) prévu pour le rouleau (10), de chaque organe (14) est fixée à la surface externe d'un élément porteur (11) cylindrique, seulement en une pluralité d'emplacements relativement espacés entre eux.

4. Machine selon l'une quelconque des revendications précédentes, caractérisée en ce que chaque organe en plaque (14) définit au moins deux desdits saillants (13) pratiquement plans.

5. Machine selon l'une quelconque des revendications précédentes, caractérisée en ce que, dans chaque couronne, les extrémités jointives d'organes en plaques (14) séparés coopèrent pour définir d'autres saillants (13).

6. Machine selon l'une quelconque des revendications précédentes, en étant lue comme dépendant directement ou indirectement de la revendication 2, caractérisée en ce que chaque couronne comprend trois desdits organes en plaques (14) ayant approximativement la forme d'un W avec des ailes.

7. Machine selon l'une quelconque des revendications précédentes, caractérisée en ce que le plan général de chaque couronne et de chaque organe en plaque (14) constituant cette couronne est perpendiculaire ou sensiblement perpendiculaire à l'axe longitudinal (a) de l'élément porteur cylindrique (11) du rouleau (10) (Figure 4).

8. Machine selon l'une quelconque des revendications précédentes, en étant lue comme dépendante de la revendication 3, caractérisée en ce que la périphérie radialement intérieure de chaque organe en plaque (14) est conformée pour correspondre à la forme externe de l'élément porteur cylindrique (11), seulement en une pluralité d'emplacements relativement espacés entre eux.

9. Machine selon l'une quelconque des revendications précédentes, caractérisée en ce que la périphérie intérieure, par rapport à l'axe de rotation (a) prévu pour le rouleau (10), de chacun d'une pluralité d'organes en plaques (14) qui définissent lesdits saillants (13) pratiquement plans est constituée, en totalité ou principalement, par les extrémités intérieures d'une pluralité de saillants de chaque organe en plaque (14), ces saillants se terminant en pointe vers l'intérieur.

10. Machine selon la revendication 9, caractérisée en ce que les extrémités intérieures des saillants se terminant en pointe vers l'intérieur, sur chaque organe en plaque (14) ont une configuration concave courbée en arc de cercle, le centre de courbure coincidant sensiblement avec l'axe de rotation (a) prévu pour le rouleau (10).

11. Machine selon la revendication 5, caractérisée en ce qu'un saillant (13) pratiquement plan qui est défini par les extrémités voisines de deux organes en plaques (14) dans une desdites couronnes présente un interstice qui est de plus petite taille qu'un interstice correspondant à un des saillants (13) qui est défini totalement par l'organe en plaque (14) respectif.

12. Machine selon l'une quelconque des revendications précédentes, caractérisée en ce qu'une pluralité des organes en plaques (14) qui définissent les saillants (13) pratiquement plans ont approximativement la forme d'un W avec des ailes, en étant formés à partir d'une seule bande de tôle (Figure 5).

13. Machine selon l'une quelconque des revendications précédentes, caractérisée en ce que la machine comprend aussi une pluralité d'organes de travail du sol (3) disposés en une rangée qui s'étend sensiblement horizontalement et perpendiculairement, ou tout au moins transversalement, par rapport au sens de marche (A) prévu pour le travail de la machine, avec chaque organe (3) étant agencé pour être entraîné en rotation par un moteur autour d'un axe (2) correspondant, sensiblement vertical ou tout au moins s'étendant vers le haut, et étant agencé pour coopérer avec l'organe (3) immédiatement voisin ou avec chacun de ceux-ci, dans ladite rangée, en travaillant le sol, et en ce que ledit rouleau (10) est situé à l'arrière desdits organes (3) par rapport au sens de marche (A) prévu pour le travail, de manière à être réglable (9) vers le haut et vers le bas dans son niveau d'ensemble par rapport à celui des organes (3).
